(19) Europäisches Patentamt
European Patent Office
Office européen des brevets

(11) **EP 3 708 621 B1**

(12) **EUROPÄISCHE PATENTSCHRIFT**

(45) Veröffentlichungstag und Bekanntmachung des Hinweises auf die Patenterteilung:
**29.06.2022 Patentblatt 2022/26**

(21) Anmeldenummer: **20161350.2**

(22) Anmeldetag: **06.03.2020**

(51) Internationale Patentklassifikation (IPC):
*C09D 133/10* (2006.01)   *C09J 133/10* (2006.01)

(52) Gemeinsame Patentklassifikation (CPC):
(C-Sets verfügbar)
**C09D 133/10; C09J 133/10**        (Forts.)

(54) **HAFTKLEBMASSE**

ADHESIVE COMPOSITION

PÂTE ADHÉSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2019 DE 102019203286**

(43) Veröffentlichungstag der Anmeldung:
**16.09.2020 Patentblatt 2020/38**

(73) Patentinhaber: **tesa SE**
**22848 Norderstedt (DE)**

(72) Erfinder:
• **PÜTZ, Benjamin**
 **41464 Neuss (DE)**
• **ZIMMERMANN, Sarah**
 **25335 Elmshorn (DE)**

(74) Vertreter: **tesa SE**
**Hugo-Kirchberg-Straße 1**
**22848 Norderstedt (DE)**

(56) Entgegenhaltungen:
**EP-A1- 1 580 245       DE-A1-102013 224 772**
**DE-A1-102013 224 773**

EP 3 708 621 B1

(52) Gemeinsame Patentklassifikation (CPC): (Forts.)

C-Sets
**C09D 133/10, C08L 57/02, C08L 93/04,
C08L 2205/025, C08L 2205/035;
C09J 133/10, C08L 45/00, C08L 57/02,
C08L 2205/025, C08L 2205/035;
C09J 133/10, C08L 57/02, C08L 93/04,
C08L 2205/025, C08L 2205/035**

C-Sets

**Beschreibung**

Die Erfindung der betrifft das technische Gebiet der Acrylat-basierten Haftklebmassen, wie sie in der Technik vielfältig zur Herstellung von Verklebungen verwendet werden. Spezifischer schlägt die Erfindung eine Acrylat-basierte Haftklebmasse vor, die eine spezielle Kombination von Harzen umfasst und insbesondere zur Verwendung auf rauen oder niederenergetischen Oberflächen geeignet ist.

Klebrigmacher (Tackifier) werden in der Technik für sehr unterschiedliche Einsatzgebiete verwendet. Unter anderem ist es inzwischen auch auf dem Gebiet der Klebstoffe gebräuchlich, den mehr oder weniger klebrigen Matrixmaterialien Zusätze beizugeben, welche die Klebkraft der Zusammensetzung erhöhen. Es liegt auf der Hand, dass ein solcher Hilfsstoff die sonstigen Eigenschaften der Klebmasse möglichst wenig oder wenn, dann in positivem Sinne beeinflussen soll.

Im Bereich der Haftklebmassen, wie sie vielfältig in Klebebändern verwendet werden, haben sich Poly(meth)acrylate als sehr gut einsetzbare Basismaterialien erwiesen. Sie zeigen exzellente Eigenschaften im Hinblick auf zum Beispiel die Beständigkeit gegenüber Licht, Wetter und einer Reihe von Chemikalien ebenso wie hinsichtlich ihrer intrinsischen Klebkraft sowie ihrer Alterungs- und Hitzebeständigkeit. Zudem sind sie auf einer Reihe von polaren und auch weniger polaren Substraten verwendbar, beispielsweise auf Glas und Stahl, aber auch auf Polystyrol und Polycarbonaten. Es besteht ein grundsätzliches Interesse daran, die Klebleistung Poly(meth)acrylat-basierter Zusammensetzungen gerade auf weniger polaren oder auch rauen Substraten zu verbessern, um von den zahlreichen sonstigen positiven Eigenschaften dieser Substanzen auch bei derartigen Verklebungen profitieren zu können. In diesem Zusammenhang sind insbesondere auch Weiterentwicklungen geeigneter Klebharze von Interesse.

WO 2010/002557 A1 beschreibt eine Klebmasse zur Verwendung auf Materialien mit niederenergetischer Oberfläche. Die Klebmasse enthält ein Acrylat-Copolymer, einen Klebkraftverstärker mit hoher Glasübergangstemperatur und einen Klebkraftverstärker mit niedriger Glasübergangstemperatur, wobei beide Klebkraftverstärker eine Glasübergangstemperatur aufweisen, die höher ist als die des Acrylat-Copolymers.

EP 1 580 245 A1 offenbart eine Haftklebmasse, die ein Acrylat-Copolymer und Klebharze enthält, wobei die Klebharze jeweils ein natürliches Produkt als Rohstoff enthalten. Es sind mindestens vier Harze enthalten, die sich in ihrer molekularen Struktur unterscheiden. Der Anteil jedes Harzes an der Klebmasse beträgt jeweils 5 bis 20 Gewichtsteile, bezogen auf 100 Gewichtsteile des Acrylat-Polymers.

JP 2008260825 A offenbart ein doppelseitiges Klebeband mit einer Klebeschicht bestehend aus einer Acrylatzusammensetzung, die auf 4-Hydroxybutyl(meth)acrylat und Acrylsäure beruht, und einem klebkraftverstärkenden Harz. Die Klebschicht ist auf einem Vlies aufgebracht. Weitere Klebemassen werden in den DE-A-102013224772 und DE-A-102013224773 offenbart.

Aufgabe der vorliegenden Erfindung war es, eine Haftklebmasse zur Verfügung zu stellen, mit der sich hohe Verklebungsfestigkeiten insbesondere auf unpolaren oder rauen Untergründen realisieren lassen. Der Lösung der Aufgabe liegt der Gedanke zugrunde, Poly(meth)acrylate mit einer spezifischen Kombination von Harzen zu versehen. Ein erster und allgemeiner Gegenstand der Erfindung ist eine Haftklebmasse, die

a) mindestens ein Poly(meth)acrylat;
b) mindestens ein Harz A ausgewählt aus Kolophonium und Terpenphenolharzen;
c) mindestens ein Kohlenwasserstoffharz B1 mit einem Erweichungspunkt von größer als 50 °C; und
d) mindestens ein Kohlenwasserstoffharz B2 mit einem Erweichungspunkt von kleiner oder gleich 25 °C

enthält, wobei die Haftklebemasse ein oder mehrere Harze A zu insgesamt 15% - 30% bezogen auf das Gesamtgewicht der Klebemasse enthält.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, häufig hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Adhäsion. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G'' = (\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Eine Masse gilt insbesondere dann als Haftklebmasse und wird im Sinne der Erfindung insbesondere dann als solche definiert, wenn bei 23 °C im Deformationsfrequenzbereich von $10^0$ bis $10^1$ rad/sec sowohl G' als auch G" zumindest zum Teil im Bereich von $10^3$ bis $10^7$ Pa liegen. "Zum Teil" heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb des entsprechenden Fensters liegt.

Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.- % aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Das Poly(meth)acrylat der erfindungsgemäßen Haftklebmasse kann ein Homopolymer oder ein Copolymer sein; bevorzugt ist es ein Copolymer. Der Begriff "Copolymer" umfasst Polymere, die auf mindestens zwei verschiedene Monomere zurückgeführt werden können, welche grundsätzlich auf beliebige Art und Weise, beispielsweise statistisch, lokal angereichert, blockweise oder alternierend angeordnet sein können.

Das Poly(meth)acrylat der erfindungsgemäßen Haftklebmasse kann eine lineare, verzweigte, radiale oder auch gepfropfte Struktur aufweisen. Grundsätzlich kann die erfindungsgemäße Haftklebmasse ein oder mehrere Poly(meth)acrylat(e) enthalten. Auch wenn nachfolgend oder vorstehend nur von "dem Poly(meth)acrylat" oder "den Poly(meth)acrylaten" die Rede ist, umfasst dies jeweils sowohl den Fall, dass die Haftklebmasse nur ein Poly(meth)acrylat enthält, als auch den Fall, dass die Haftklebmasse mehrere Poly(meth)acrylate enthält.

Die gewichtsmittlere Molmasse des Poly(meth)acrylats - im Falle mehrerer Poly(meth)acrylate aller Poly(meth)acrylate - der Haftklebmasse beträgt bevorzugt 250.000 bis 10.000.000 g/mol, stärker bevorzugt 500.000 bis 5.000.000 g/mol. Die Angaben von zahlen- oder gewichtsmittleren Molmassen $M_n$ oder $M_w$ in dieser Schrift beziehen sich auf die an sich bekannte Bestimmung per Gelpermeationschromatographie (GPC, siehe unten).

Bevorzugt wird die Zusammensetzung des Poly(meth)acrylats derart gewählt, dass es eine Glasübergangstemperatur (DDK, siehe unten) von nicht mehr als 0 °C, bevorzugt von nicht mehr als - 20 °C, sehr bevorzugt von nicht mehr als - 40 °C aufweist.

Die Glastemperatur von Copolymeren kann durch Wahl und mengenmäßige Zusammensetzung der eingesetzten Komponenten derart gewählt werden, dass sich in Analogie zur Fox-Gleichung (T.G. Fox, Bull. Am. Phys. Soc. 1956, 1, 123) nach Gleichung G1

$$\frac{1}{T_G} = \sum_n \frac{w_n}{T_{G,n}} \qquad\qquad (G1)$$

mit n = Laufzahl über die eingesetzten Monomere, $w_n$ = Massenanteil des jeweiligen Monomers n (Gew.-%) und $T_{G,n}$ = jeweilige Glasübergangstemperatur des Homopolymers aus den jeweiligen Monomeren n in K ein geeigneter Glasübergangspunkt $T_G$ für das Polymer ergibt.

Glasübergangstemperaturen von Homopolymeren können bis zu einer bestimmten oberen Grenzmolmasse von der Molmasse des Homopolymeren abhängen; die Bezugnahme auf Glasübergangstemperaturen von Homopolymeren in dieser Schrift erfolgt in Bezug auf solche Polymere, deren Molmassen oberhalb dieser Grenzmolmasse liegen, also im Glasübergangstemperatur-konstanten Bereich. Die Bestimmung der $T_G$ erfolgt nach Entfernung des Lösemittels im unvernetzten Zustand (in Abwesenheit von Vernetzern).

Analog kann die Gleichung G1 auch zur Bestimmung und Vorhersage der Glasübergangstemperatur von Polymergemischen angewendet werden. Dann gilt, sofern es sich um homogene Mischungen handelt:

n = Laufzahl über die eingesetzten Polymere, $w_n$ = Massenanteil des jeweiligen Polymeren n (Gew.-%) und $T_{G,n}$ = jeweilige Glasübergangstemperatur des Polymeren n in K.

Die dem Poly(meth)acrylat der erfindungsgemäßen Haftklebmasse zugrunde liegenden Monomere entsprechen bevorzugt der Formel (I)

$$CH_2=C(R^1)(COOR^2) \qquad (I),$$

worin

$R^1$ für ein H-Atom oder eine Methylgruppe steht und $R^2$ für ein H-Atom oder einen linearen oder verzweigten, gesättigten oder ungesättigten Kohlenwasserstoffrest mit 1 bis 30, stärker bevorzugt mit 4 bis 18 C-Atomen steht.

Bevorzugt ist zumindest ein dem Poly(meth)acrylat zugrunde liegendes Monomer ausgewählt aus solchen Monomeren, deren Homopolymer eine Glasübergangstemperatur $T_G$ von nicht mehr als 0 °C, stärker bevorzugt von maximal - 20 °C aufweist. Besonders bevorzugt ist zumindest ein Monomer des Poly(meth)acrylats ausgewählt aus

- Acrylsäureestern mit linearen Alkoholen mit bis zu 10 C-Atomen oder mit verzweigten Alkoholen mit mindestens 4 C-Atomen und
- Methacrylsäureestern mit linearen Alkoholen mit 8 bis 10 C-Atomen oder verzweigten Alkoholen mit mindestens 10 C-Atomen.

Insbesondere ist zumindest ein dem Poly(meth)acrylat zugrunde liegendes Monomer ausgewählt aus der Gruppe bestehend aus Methylacrylat, Methylmethacrylat, Ethylacrylat, n-Propylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, n-Nonylmethacrylat, n-Decylacrylat, n-Decylmethacrylat, Isobutylacrylat, Isopentylacrylat, Isooctylacrylat, Isooctylmethacrylat, 2-Ethylhexylacrylat, 2-Ethylhexylmethacrylat und 2-Propylheptylacrylat.

Weitere dem Poly(meth)acrylat der erfindungsgemäßen Haftklebmasse zugrunde liegende Monomere können eine Tendenz zur Ausbildung semikristalliner Bereiche im Polymer aufweisen. Derartige Monomere sind insbesondere ausgewählt aus (Meth)acrylsäureestern mit linearen Alkoholen mit mindestens 12, stärker bevorzugt mit mindestens 14 C-Atomen. Besonders bevorzugte derartige Monomere sind Stearylacrylat und Stearylmethacrylat. Weitere dem Poly(meth)acrylat der erfindungsgemäßen Haftklebmasse zugrunde liegende Monomere können vorteilhaft monofunktionelle Acrylate und/oder Methacrylate von überbrückten Cycloalkylalkoholen mit zumindest 6 C-Atomen im Cycloalkylalkoholrest sein.

Die Cycloalkylalkohole können auch substituiert sein, z.B. durch $C_1$-bis $C_6$-Alkylgruppen, Halogenatome oder Cyanogruppen. Spezifische Beispiele sind Cyclohexylmethacrylate, Isobornylacrylat, Isobornylmethacrylat und 3,5-Dimethyladamantylacrylat.

Zur Variation der Glasübergangstemperatur können die dem Poly(meth)acrylat der erfindungsgemäßen Haftklebmasse zugrunde liegenden Monomere auch solche Comonomere umfassen, deren Homopolymere eine hohe statische Glasübergangstemperatur besitzen. Derartige Monomere sind bevorzugt aromatische Vinylverbindungen, z.B. Styrol, wobei die aromatischen Kerne bevorzugt $C_4$- bis $C_{18}$-Bausteine umfassen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und - methacrylat.

Weitere dem Poly(meth)acrylat der erfindungsgemäßen Haftklebmasse bis zu einem Anteil von 40 Gew.-% zugrunde liegende Comonomere können prinzipiell alle mit den Acrylaten verträglichen Verbindungen mit copolymerisierbaren Doppelbindungensein, wie etwa Vinylverbindungen. Solche Vinylverbindungen sind bevorzugt ausgewählt aus der Gruppe bestehend aus Vinylestern, Vinylethern, Vinylhalogeniden, Vinylidenhalogeniden sowie Vinylverbindungen mit aromatischen Cyclen und Heterocyclen, insbesondere in $\alpha$-Stellung zur Doppelbindung. Besonders bevorzugte Comonomere in diesem Sinne sind ausgewählt aus der Gruppe bestehend aus Vinylacetat, Vinylformamid, Vinylpyridin, Ethylvinylether, Vinylchlorid, Vinylidenchlorid und Acrylonitril.

Die dem Poly(meth)acrylat der erfindungsgemäßen Haftklebmasse zugrunde liegenden Monomere umfassen bevorzugt (Meth)acrylate mit funktionellen Gruppen, die mit Vernetzern zur Reaktion kommen können. Besonders bevorzugt enthalten diese (Meth)acrylate Säuregruppen, insbesondere Acrylsäure-, Sulfonsäure- oder Phosphonsäuregruppen oder Säureanhydridgruppen. Derartige Monomere sind besonders bevorzugt ausgewählt aus der Gruppe bestehend aus Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäure, Vinylessigsäure, Vinylphosphonsäure und Maleinsäureanhydrid. Ganz besonders bevorzugt umfassen die dem Poly(meth)acrylat der erfindungsgemäßen Haftklebmasse zugrunde liegenden Monomere Acrylsäure. Dem Poly(meth)acrylat der erfindungsgemäßen Haftklebmasse zugrunde liegende Monomere mit funktionellen Gruppen, die mit Vernetzern zur Reaktion kommen können, sind im Poly(meth)acrylat insbesondere zu einem Anteil von 0,5 bis 5 Gew.-%, stärker bevorzugt von 0,8 bis 3 Gew.-%, bezogen auf das Gesamtgewicht des Poly(meth)acrylats bzw. aller dem Poly(meth)acrylat zugrunde liegenden Monomere, enthalten.

In einer Ausführungsform ist das Poly(meth)acrylat ein Copolymer, das auf eine Monomerenzusammensetzung umfassend

i) einen oder mehrere Acrylsäurealkylester mit einem Alkylrest umfassend 1 bis 4 C-Atome;
ii) einen oder mehrere Acrylsäurealkylester mit einem Alkylrest umfassend 5 oder mehr C-Atome; und
iii) Acrylsäure

zurückgeführt werden kann.

Bevorzugt umfasst die Monomerenzusammensetzung Acrylsäure zu 0,5 bis 5 Gew.-%, bezogen auf das Gesamtgewicht der Monomerenzusammensetzung.

Besonders bevorzugt ist das Poly(meth)acrylat auf folgende Monomerenzusammensetzung zurückzuführen:

| | |
|---|---|
| n-Butylacrylat | 40 bis 75 Gew.-%, insbesondere 45 bis 70 Gew.-%; |
| 2-Ethylhexylacrylat | 22 bis 58 Gew.-%, insbesondere 27 bis 53 Gew.-%; |
| Acrylsäure | 0,5 bis 4 Gew.-%. |

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont).

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Die Poly(meth)acrylate der erfindungsgemäßen Haftklebmasse sind bevorzugt durch Verknüpfungsreaktionen - insbesondere im Sinne von Additions- oder Substitutionsreaktionen oder auch koordinativen Verknüpfungsreaktionen - von in ihnen enthaltenen funktionellen Gruppen mit speziellen Verbindungen - sogenannten Vernetzern - vernetzt. Die Positionen innerhalb der Vernetzermoleküle, von denen aus die Makromoleküle angegriffen werden, werden auch als "reaktive Zentren" bezeichnet. Vernetzermoleküle enthalten zwei oder mehr reaktive Zentren und sind daher in der Lage, zwei oder mehr Makromoleküle miteinander zu verknüpfen. Es kommt dabei gelegentlich auch zu unerwünschten Nebenreaktionen, bei denen die reaktiven Zentren ein- und desselben Vernetzermoleküls mit nur einem Makromolekül abreagieren.

Grundsätzlich lassen sich zwei Arten von Vernetzern unterscheiden:

1) Kovalente Vernetzer, deren reaktive Zentren die Poly(meth)acrylat-Makromoleküle kovalent angreifen und daher eine kovalente Bindung zwischen reaktivem Zentrum des Vernetzers und der angegriffenen Position des Makromoleküls, insbesondere einer funktionellen Gruppe des Makromoleküls, ausbilden. Grundsätzlich kommen alle Reaktionstypen zur Ausbildung kovalenter Bindungen in Betracht.

2) Koordinative Vernetzer, deren reaktive Zentren die Poly(meth)acrylat-Makromoleküle koordinativ angreifen und daher eine koordinative Bindung zwischen reaktivem Zentrum des Vernetzers und der angegriffenen Position des Makromoleküls, insbesondere einer funktionellen Gruppe des Makromoleküls, ausbilden. Grundsätzlich kommen alle Reaktionstypen zur Ausbildung koordinativer Bindungen in Betracht.

In einer Ausführungsform ist das Poly(meth)acrylat der erfindungsgemäßen Haftklebmasse zumindest kovalent mit einem oder mehreren Vernetzern ausgewählt aus der Gruppe bestehend aus Glycidylaminen, multifunktionellen Epoxiden, multifunktionellen Aziridinen und multifunktionellen Isocyanaten vernetzt. Besonders bevorzugt ist das Poly(meth)acrylat der erfindungsgemäßen Haftklebmasse zumindest kovalent mit einem oder mehreren Vernetzern ausgewählt aus der Gruppe bestehend aus N,N,N',N'-Tetrakis(2,3-epoxypropyl)cyclohexyl-1,3-dimethylamin, N,N,N',N'-Tetrakis(2,3-epoxypropyl)-m-xylyl-a,a'-diamin, (3,4-Epoxycyclohexyl)methyl-3,4-epoxycyclohexylcarboxylat, Trimethylolpropan-tris(2-methyl-1-aziridinpropionat), Tolylendiisocyanat (TDI), 2,4-Tolylendiisocyanat-Dimer, Naphthylen-1,5-diisocyanate (NDI), o-Tolylendiisocyanate (TODI), Diphenylmethandiisocyanate (MDI), Triphenylmethantriisocyanate, Tris-(p-isocyanatophenyl)thiophosphat und Polymethylene-polyphenyl-isocyanat vernetzt.

In einer weiteren Ausführungsform ist das Poly(meth)acrylat der erfindungsgemäßen Haftklebmasse zumindest koordinativ mit einem oder mehreren Chelat-Vernetzern, bevorzugt mit einem oder mehreren multivalenten Chelat-Vernetzern, insbesondere multivalenten Metallchelaten, vernetzt. "Multivalente Metallchelate" sind Verbindungen, in denen ein multivalentes Metallatom koordinativ an eine oder mehrere organische Verbindungen gebunden ist. Das multivalente Metallatom ist bevorzugt ausgewählt aus der Gruppe bestehend aus Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), Sr(II), Ba(II), Mo(II), Mo(IV), Mo(VI), La(III), Sn(II), Sn(IV) und Ti(IV), besonders bevorzugt aus der Gruppe bestehend aus Al(III), Zr(IV) und Ti(IV).

Die an das Metallatom gebundenen organischen Verbindungen sind bevorzugt ausgewählt aus der Gruppe bestehend aus Alkylestern, Alkoholen, Carbonsäuren, Ethern und Ketonen. Besonders bevorzugt ist das Poly(meth)acrylat der erfindungsgemäßen Haftklebmasse zumindest koordinativ mit einem oder mehreren Vernetzern ausgewählt aus der Gruppe bestehend aus Titandipropoxid-bis(acetylacetonat), Titandibutoxid-bis(octylenglycolat), Titandipropoxid-bis(ethylacetoacetat), Titandipropoxid-bis(lactat), Titandipropoxid-bis(triethanolaminat), Titandi-n-butoxid-bis(triethanolaminat), Titantri-n-butoxidmonostearat, Butyltitanat-Dimer, Poly(titanacetylacetonat), Aluminumdiisopropoxidmonoethylacetat, Aluminumdi-n-butoxidmonomethylacetoacetat, Aluminumdi-i-butoxidmonomethylacetoacetat, Aluminumdi-n-butoxidmonoethylacetoacetat, Aluminumdi-sec-butoxidmonoethylacetoacetat, Aluminumtriacetylacetonat, Aluminumtriethylacetoacetonat, Aluminummonoacetylacetonatbis(ethylacetoacetonat) und zirconiumtetraacetylacetonat vernetzt.

Die Poly(meth)acrylate der erfindungsgemäßen Haftklebmasse können mit einem oder mehreren kovalenten Vernetzern, einem oder mehreren koordinativen Vernetzern oder mit einem Gemisch aus jeweils einem oder mehreren kovalenten und koordinativen Vernetzern vernetzt sein.

Bevorzugt enthält die erfindungsgemäße Haftklebmasse kovalente Vernetzer zu insgesamt 0,015 bis 0,1 Gew.-%, besonders bevorzugt zu insgesamt 0,02 bis 0,075 Gew.-%, jeweils bezogen auf das Gesamtgewicht der Poly(meth)acrylate.

Die erfindungsgemäße Haftklebmasse enthält mindestens ein Harz A ausgewählt aus Kolophoniumharzen und Terpenphenolharzen. Grundsätzlich kann die Haftklebmasse ein oder mehrere Harze A enthalten; bevorzugt enthält sie genau ein Harz A ausgewählt aus Kolophoniumharzen und Terpenphenolharzen.

Der Begriff "Kolophoniumharze" umfasst sowohl natürliches als auch modifiziertes Kolophonium.

Die erfindungsgemäße Haftklebmasse enthält ein oder mehrere Harze A insgesamt zu 15 bis 30 Gew.-%, bezogen auf das Gesamtgewicht der Haftklebmasse. Besonders bevorzugt enthält die erfindungsgemäße Haftklebmasse genau ein Harz A zu 15 bis 30 Gew.-%, bezogen auf das Gesamtgewicht der Haftklebmasse.

Das mindestens eine Harz A ist besonders bevorzugt ein Terpenphenolharz.

Die erfindungsgemäße Haftklebmasse umfasst weiter mindestens ein Kohlenwasserstoffharz B1 mit einem Erweichungspunkt von größer als 50 °C und mindestens ein Kohlenwasserstoffharz B2 mit einem Erweichungspunkt von kleiner oder gleich 25 °C. Wie sich gezeigt hat, weisen Acrylat-basierte Haftklebmassen, welche die erfindungsgemäße Kombination von Terpenphenol- oder Kolophoniumharz mit zwei Kohlenwasserstoffharzen mit hohem und niedrigem Erweichungspunkt umfassen, besonders gute klebtechnische Eigenschaften auf Substraten mit niedriger Oberflächenenergie und auf rauen Substraten auf.

Grundsätzlich kann die Haftklebmasse jeweils ein oder mehrere Kohlenwasserstoffharze B1 und B2 enthalten; bevorzugt enthält sie genau ein Kohlenwasserstoffharz B1 und genau ein Kohlenwasserstoffharz B2.

Bevorzugt enthält die erfindungsgemäße Haftklebmasse ein oder mehrere Kohlenwasserstoffharze B1 zu insgesamt 10 bis 25 Gew.-%, bezogen auf das Gesamtgewicht der Haftklebmasse. Besonders bevorzugt enthält die erfindungsgemäße Haftklebmasse genau ein Kohlenwasserstoffharz B1 zu 12 bis 20 Gew.-%, bezogen auf das Gesamtgewicht der Haftklebmasse.

Bevorzugt enthält die erfindungsgemäße Haftklebmasse ein oder mehrere Kohlenwasserstoffharze B2 zu insgesamt 5 bis 15 Gew.-%, bezogen auf das Gesamtgewicht der Haftklebmasse. Besonders bevorzugt enthält die erfindungsgemäße Haftklebmasse genau ein Kohlenwasserstoffharz B2 zu 8 bis 12 Gew.-%, bezogen auf das Gesamtgewicht der Haftklebmasse.

Die erfindungsgemäße Haftklebmasse kann optional ein oder mehrere Additive ausgewählt aus der Gruppe bestehend aus

- Weichmachern, z.B. niedermolekularen Poly(meth)acrylaten, Phthalaten, wasserlöslichen Weichmachern, Phosphaten und Polyphosphaten;
- Funktionalen Additiven, z.B. Initiatoren und Beschleunigern;
- Elektrisch leitfähigen Materialien, z.B. konjugierten Polymeren, dotierten konjugierten Polymeren, Metallpigmenten, Metallpartikeln, Metallsalzen, metallbeschichteten Partikeln, z.B. silberbeschichteten Kugeln, Graphit, Leitrußen, Kohlenstofffasern, ferromagnetischen Additiven;
- Schäumungsmitteln, Blähmitteln, expandierbaren Hohlkugeln;
- schwerentflammbaren Füllstoffen, z.B. Ammoniumpolyphosphat;
- Compoundierungsmitteln, Keimbildnern;
- Alterungsschutzmitteln, z.B. primären und sekundären Antioxidantien; Lichtschutzmitteln, Ozonschutzmitteln;
- pulver- und granulatförmigen Füllstoffen, Farbstoffen und Pigmenten, z. B. Fasern, Rußen, Zinkoxiden, Titandioxid, Kreiden, Kieselsäuren, Silikaten, Voll- oder Hohlglaskugeln, Voll- oder Hohlpolymerkugeln, keramischen Voll- oder Hohlkugeln, Mikrokugeln aus anderen Materialien; und
- organischen Füllstoffen

enthalten.

Ein weiterer Gegenstand der Erfindung ist ein Klebeband, das eine erfindungsgemäße Haftklebmasse umfasst. Das erfindungsgemäße Klebeband kann ein- oder beidseitig klebend ausgestaltet sein; d.h. es kann nur auf eine (Außen-)Seite haftklebend ausgerüstet sein oder beide Seiten.

Im einfachsten Fall besteht das erfindungsgemäße Klebeband aus einer Schicht der erfindungsgemäßen Haftklebmasse; es handelt sich dann um ein so genanntes Transferklebeband.

Bevorzugt umfasst das erfindungsgemäße Klebeband eine Trägerschicht, die aus jedem in Frage kommenden Material bestehen kann. Trägermaterialien für Klebebänder sind in der Fachwelt hinlänglich bekannt.

Das erfindungsgemäße Klebeband kann ein- oder beidseitig mit einem temporären Abdeckmaterial bedeckt sein, das vor der Applikation entfernt wird. Derartige Abdeckmaterialien werden üblicherweise als Releaseliner bezeichnet und sind in der Fachwelt ebenfalls hinlänglich bekannt.

Ein weiterer Gegenstand der Erfindung ist die Verwendung einer erfindungsgemäßen Haftklebmasse oder eines erfindungsgemäßen Klebebandes zur Herstellung von Verklebungen auf Untergründen mit niedriger Oberflächenenergie und/oder auf Untergründen mit einer mittleren Rauigkeit von mindestens 5 $\mu$m; insbesondere zur Herstellung von Verklebungen auf Untergründen mit niedriger Oberflächenenergie.

Die erfindungsgemäßen Klebeprodukte finden dabei eine Vielzahl von Anwendungsgebieten, so zum Beispiel in der Bauindustrie, in der Elektronikindustrie, im Heimwerkerbereich, in der Autoindustrie, im Schiffs-, Boots- und Eisenbahnbau, für Haushaltsgeräte oder für Möbel. Vorteilhafte Anwendungen sind beispielsweise das Verkleben von Leisten und Emblemen in den vorgenannten Bereichen, das Verkleben von Versteifungsprofilen in Fahrstühlen, das Verkleben von Bauteilen und Produkten in der Solarindustrie, die Rahmenverklebung bei elektronischen Konsumgütern wie z.B. Fernsehern und Verklebungen bei der Schilderherstellung.

Die erfindungsgemäße Klebemasse und die erfindungsgemäßen Klebebänder eignen sich auch hervorragend zum Verkleben flexibler Druckplatten auf gekrümmten Oberflächen. Im so genannten Flexodruckverfahren werden flexible Druckplatten (auch als Klischees bezeichnet) auf Druckzylinder oder Druckhülsen verklebt. Derartige Klischees bestehen beispielsweise aus einer Polyethylenterephthalat-Folie (PET-Folie), auf die eine Schicht eines Fotopolymers aufgebracht ist, in die durch Belichtung das entsprechende Druckrelief eingebracht werden kann. Die Verklebung des Klischees auf dem Druckzylinder bzw. der Druckhülse erfolgt dann über die PET- Folie.

Die erfindungsgemäßen Klebebänder erfüllen hervorragend die sehr hohen Anforderungen in diesem Bereich. Für den Druckprozess muss das Haftklebeband eine bestimmte Härte, aber auch eine bestimmte Elastizität aufweisen. Zudem sollte die Klebkraft ausreichend sein, damit sich die Druckplatte nicht von dem hier zu verwendenden doppelseitigen Haftklebeband oder das Haftklebeband vom Zylinder bzw. der Hülse ablöst. Dies gilt beispielsweise auch bei erhöhten Temperaturen von 40 bis 60 °C und bei höheren Druckgeschwindigkeiten. Neben dieser Eigenschaft soll die Haftklebmasse aber auch reversible Hafteigenschaften besitzen, um die Druckplatten nach den Druckvorgängen wieder ablösen zu können. Dabei muss sowohl die Klebeverbindung des Haftklebebandes zum Druckzylinder bzw. zur Druckhülse als auch die zum Klischee rückstandsfrei zu lösen sein, um eine Wiederverwendbarkeit beider Komponenten zu gewährleisten. Diese Ablösbarkeit sollte auch nach einer Verklebung über einen längeren Zeitraum (bis zu 6 Monate) gegeben sein. Zudem ist es erwünscht, dass sich das Haftklebeband und insbesondere die Druckplatte ohne Zerstörung, d. h. ohne großen Kraftaufwand wieder entfernen lassen, da die Druckplatten in der Regel mehrfach eingesetzt werden. Zudem sollten keine Rückstände auf der Druckplatte und auf dem Zylinder bzw. der Hülse verbleiben. Zusammenfassend werden somit sehr hohe Anforderungen an die für diesen Einsatz geeigneten doppelseitigen Haftklebebänder gestellt, die von der erfindungsgemäßen Haftklebmasse hervorragend erfüllt werden.

Die erfindungsgemäße Haftklebmasse kann auch sehr gut zum Verkleben von Bauteilen feinmechanischer, optischer, elektrischer und/oder elektronischer Geräte eingesetzt werden, zum Beispiel bei deren Herstellung, Reparatur, Verzierung oder dergleichen. Dabei können beispielsweise Materialien wie Kunststoffe, Gläser, Metalle und dergleichen zur Verklebung kommen.

Die erfindungsgemäße Haftklebmasse und erfindungsgemäße Klebebänder eignen sich insbesondere auch zur permanenten Verklebung von flexiblen Materialien, insbesondere bei der Herstellung flexibler Displays. Solche Displays nehmen an Bedeutung zu.

In vorteilhafter Weise kann die Haftklebmasse zum Verkleben von Fenstern oder Linsen in Gehäusen feinmechanischer, optischer und/oder elektronischer Geräte (sogenanntes "Lens Mounting") eingesetzt werden. Dabei ist zumindest eines der starren oder flexiblen Substrate durchsichtig (transparent) oder durchscheinend (transluzent). Das durchsichtige beziehungsweise durchscheinende Substrat kann beispielweise ein Fenster oder eine optische Linse zum Zwecke des Schutzes darunter angeordneter empfindlicher Komponenten sein. Solche Komponenten können beispielweise Flüssigkristallanzeigen (LCD), Leuchtdioden (LED) oder organische Leuchtdioden (OLED) von Displays, aber auch gedruckte Schaltungen oder andere empfindliche elektronische Bauteile sein. Wichtige Anwendungsgebiete solcher Komponenten sind beispielweise berührungsempfindliche Displays oder das Bewirken optischer Effekte für die Funktion des Gerätes, z.B. Lichtbrechung, Lichtbündelung, Lichtabschwächung oder Lichtverstärkung. Das transparente Substrat wird dabei bevorzugt derart gewählt, dass es einen Haze-Wert von höchstens 50 %, besonders bevorzugt von nicht mehr als 10 %, sehr bevorzugt von nicht mehr als 5 % (gemessen nach ASTM D 1003) aufweist.

Das zweite Substrat ist vorzugsweise ebenfalls ein Bauteil eines feinmechanischen, optischen und/oder elektronischen Gerätes, stärker bevorzugt ein Gehäuse oder eine Halterung für die vorstehend beschriebenen Fenster oder Linsen. Besonders bevorzugt ist das durchsichtige bzw. durchscheinende Substrat ein Substrat aus Glas, Polymethylmethacrylat und/oder Polycarbonat.

Insbesondere kann das zweite Substrat aus Acrylnitril-Butadien-Styrol-Copolymeren (ABS), Polyamid oder Polycarbonat bestehen, die insbesondere auch glasfaserverstärkt sein können; oder aus Aluminium, insbesondere auch anodisiertem (eloxiertem) Aluminium, oder aus Magnesium oder Metalllegierungen.

Auch den Substrat-Materialien können Additive wie beispielsweise Farbstoffe, Lichtschutzmittel, Alterungsschutzmittel, Weichmacher oder dergleichen beigemischt sein, sofern dies für den beabsichtigten Einsatzzweck vorteilhaft ist; bei durchsichtigen oder durchscheinenden Materialien insbesondere nur insoweit, als es diese optischen Eigenschaften nicht oder nur in vertretbarem Maße stört.

Elektronische, optische und feinmechanische Geräte im Sinne dieser Anmeldung sind insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)), einzuordnen sind; sofern es sich dabei um elektronische, optische oder feinmechanische Geräte handelt, weiterhin Uhren und Zeitmessgeräte gemäß Klasse 14 (NCL(10-2013)),

wie insbesondere

wissenschaftliche, Schifffahrts-, Vermessungs-, fotografische, Film-, optische, Wäge-, Mess-, Signal-, Kontroll-, Rettungs- und Unterrichtsapparate und -instrumente;

Apparate und Instrumente zum Leiten, Schalten, Umwandeln, Speichern, Regeln und Kontrollieren von Elektrizität;

Bildaufzeichnungs-, -verarbeitungs-, -übertragungs- und -wiedergabegeräte, wie beispielsweise Fernseher und der-

gleichen;

akustische Aufzeichnungs-, Verarbeitungs-, Übertragungs- und Wiedergabegeräte, wie beispielsweise Rundfunkgeräte und dergleichen;

Computer, Rechengeräte und Datenverarbeitungsgeräte, mathematische Geräte und Instrumente, Computerzubehör; Bürogeräte wie beispielsweise Drucker, Faxgeräte, Kopiergeräte, Schreibmaschinen; und Datenspeichergeräte;

Fernkommunikations- und Multifunktionsgeräte mit Fernkommunikationsfunktion wie beispielweise Telefone und Anrufbeantworter;

chemische und physikalische Messgeräte, Steuergeräte und Instrumente wie beispielweise Akkumulatorladegeräte, Multimeter, Lampen, Tachometer;

nautische Geräte und Instrumente;

optische Geräte und Instrumente;

medizinische Geräte und Instrumente und solche für Sportler;

Uhren und Chronometer;

Solarzellenmodule wie etwa elektrochemische Farbstoff-Solarzellen, organische Solarzellen, Dünnschichtzellen; und

Feuerlöschgeräte.

Die technische Entwicklung richtet sich vermehrt auf solche Geräte, die immer kleiner und leichter gestaltet werden, damit sie von ihrem Besitzer jederzeit mitgeführt werden können. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrt mechanischen Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkeren Belastungen aufgrund von Feuchtigkeitseinwirkung, Temperatureinflüssen und dergleichen ausgesetzt als "immobile" Geräte, die üblicherweise in Innenräumen installiert sind und nicht oder kaum bewegt werden. Die erfindungsgemäße Haftklebmasse hat sich als besonders bevorzugt herausgestellt, solche Störeinflüsse zu überstehen und sie abzuschwächen oder zu kompensieren. Bevorzugt werden die erfindungsgemäße Haftklebmasse oder das erfindungsgemäße Klebeband daher zur Herstellung von Verklebungen in portablen elektronischen Geräten verwendet.
Nachfolgend sind einige portable Geräte beispielhaft aufgeführt:

Fotoapparate, Digitalkameras; Fotografie-Zubehörgeräte wie Belichtungsmesser, Blitzlichtgeräte, Blenden, Fotogehäuse, Objektive; Filmkameras, Videokameras;

Kleincomputer (Mobilcomputer, Taschencomputer, Taschenrechner), Laptops, Notebooks, Netbooks, Ultrabooks, Tablet-Computer, Handhelds, elektronische Terminkalender und

Organisatoren (sogenannte "Electronic Organizer" oder "Personal Digital Assistants", PDA, Palmtops), Modems;

Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");

Monitore, Displays, Bildschirme, berührungsempfindliche Bildschirme (Sensorbildschirme, "Touchscreen-Geräte"), Beamer;

Lesegeräte für elektronische Bücher ("E-Books");

Kleinfernsehgeräte, Taschenfernseher, Filmabspielgeräte, Videoabspielgeräte;

Radios (auch Klein- und Taschenrundfunkgeräte), Walkmen, Discmen, Musikabspielgeräte für z.B. CD, DVD, Blueray, Kassetten, USB, MP3; Kopfhörer;

schnurlose Telefone, Mobiltelefone, Smartphones, Funksprechgeräte, Freisprechgeräte, Personenrufgeräte (Pager, Pieper);

mobile Defibrilatoren, Blutzuckermessgeräte, Blutdruckmessgeräte, Schrittzähler, Pulsmesser;

Taschenlampen, Laserpointer;

mobile Detektoren, optische Vergrößerungsgeräte, Fernsichtgeräte, Nachtsichtgeräte;

GPS-Geräte, Navigationsgeräte, tragbare Schnittstellengeräte der Satellitenkommunikation;

Datenspeichergeräte (USB-Sticks, externe Festplatten, Speicherkarten); und Armbanduhren, Digitaluhren, Taschenuhren, Kettenuhren, Stoppuhren.

Des Weiteren sind erfindungsgemäße Haftklebmassen und Klebebänder sehr gut zum Ummanteln von langgestrecktem Gut wie insbesondere Kabelsätzen in Kraftfahrzeugen geeignet, wobei das Klebeband in einer Schraubenlinie um das langgestreckte Gut geführt oder das langgestreckte Gut in axialer Richtung von dem Band umhüllt werden kann. Die Klebebänder können dabei besonders vorteilhaft für Ummantelungen verwendet werden, die aus einer Eindeckung bestehen, bei der zumindest in einem Kantenbereich der Eindeckung das Klebeband so auf der Eindeckung verklebt ist, dass es sich über eine der Längskanten der Eindeckung erstreckt, und zwar vorzugsweise in einem im Vergleich zur Breite der Eindeckung schmalen Kantenbereich. Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist.

Weiter vorzugsweise zerstört das Klebeband bei Verklebung auf Kabeln mit PVC-Ummantelung und auf Kabeln mit Polyolefin-Ummantelung diese nicht, wenn ein Verbund aus Kabeln und Klebeband gemäß der LV 312 bei Temperaturen über 100 °C und bis zu 3000 h gelagert wird und anschließend die Kabel um einen Dorn gebogen werden.

Das erfindungsgemäße Klebeband eignet sich hervorragend für das Umwickeln von Kabeln, lässt sich für eine einfache Verarbeitung leicht abwickeln, zeigt kein oder nur geringfügiges Abflaggen und zeigt keine Kabelversprödung auch bei den hohen Temperaturklassen T3 und T4 über 3000 h.

Überdies werden erfindungsgemäße Haftklebmassen bevorzugt zur Herstellung von Labelverklebungen in Fahrzeugen, insbesondere in Automobilen, verwendet.

Beispiele

Testmethoden

Glasübergangstemperatur ($T_g$):
Die Bestimmung der statischen Glasübergangstemperatur erfolgt über Dynamische Differenzkalorimetrie (DDK) nach DIN EN ISO 11357-2. Die Angaben zur Glasübergangstemperatur $T_g$ beziehen sich auf den Glasumwandlungstemperatur-Wert $T_g$ nach DIN 53765:1994-03, sofern im Einzelfall nichts anderes angegeben ist.

Gelpermeationschromatographie (GPC):
Die Angaben von zahlenmittleren und gewichtsmittleren Molekulargewichten $M_n$, $M_w$ und $M_z$ sowie der Polydispersität PD in dieser Schrift beziehen sich auf die Bestimmung per Gelpermeationschromatographie.

Die Bestimmung erfolgt an 100 $\mu$L klarfiltrierter Probe (Probenkonzentration 0,5 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 10 $\mu$m, ID 8,0 mm · 50 mm verwendet. Zur Auftrennung werden Säulen des Typs PSS-SDV, 5 $\mu$m, $10^3$ Å (SN9090201) sowie 5 $\mu$m, $10^2$ Å (SN9090200) mit jeweils ID 8,0 mm · 300 mm eingesetzt (Säulen der Firma Polymer Standards Service; Detektion mittels Differentialrefraktometer PSS-SECurity 1260 RID). Die Durchflussmenge beträgt 0,5 mL pro Minute. Die Kalibrierung erfolgt gegen PMMA-Standards (Polymethylmethacrylat-Kalibrierung).

Erweichungspunkt:

Die Erweichungspunkte wurden in üblicher Weise gemäß ASTM E28 (Ring-and-Ball) ermittelt.

Klebkraft:

Die Bestimmung der Klebkraft erfolgte bei einem Prüfklima von 23 °C +/- 1 °C Temperatur und 50 % +/- 5 % rel. Luftfeuchte. Die Klebmassemuster wurden auf 20 mm Breite zugeschnitten und auf eine Platte aus dem jeweils angegebenen Material (PE, PP, Stahl, EPDM rau) geklebt.

Die Platten wurden vor der Messung gereinigt und konditioniert. Dazu wurden die Platten zunächst mit Lösemittel abgewischt und danach 10 Minuten (Stahl/Aceton) bzw. zwei Stunden (PE, PP/Ethanol; EPDM rau/Isopropanol) an der Luft liegen gelassen, damit das Lösungsmittel abdampfen konnte. Die dem Prüfuntergrund abgewandte Seite des Musters wurde dann mit 23 µm dicker, geätzter PET-Folie abgedeckt, wodurch verhindert wurde, dass sich das Muster bei der Messung dehnt. Danach erfolgte das Anrollen des Prüfmusters auf den Untergrund. Hierzu wurde die Klebmasse mit einer 4 kg - Rolle fünfmal hin und her bei einer Aufrollgeschwindigkeit von 10 m/min überrollt. Eine Minute ("initial") nach dem Anrollen wurde die Platte in eine spezielle Halterung geschoben, die es ermöglicht, das Muster in einem Winkel von 180° abzuziehen. Die Klebkraftmessung erfolgte mit einer Zwick-Zugprüfmaschine bei einer Abzugsgeschwindigkeit von 300 mm/min. Die Messergebnisse sind in N/cm angegeben und sind gemittelt aus drei Einzelmessungen.

Rohstoffe

Kommerziell erhältliche, eingesetzte Chemikalien

| Chemische Verbindung | Handelsname | Hersteller | CAS-Nr. |
|---|---|---|---|
| Acrylsäure (AS) | | Sigma Aldrich | 79-10-7 |
| 2-Ethylhexylacrylat (2-EHA) | | BASF | 103-11-7 |
| n-Butylacrylat (n-BA) | | BASF | 141-32-2 |
| 2,2-Azobis(2-methylbutyronitril) | Vazo® 67 | Akzo Nobel | 13472-08-7 |
| Bis-(4-tert-butylcyclo-hexyl) peroxydicarbonat | Perkadox® 16 | Akzo Nobel | 15520-11-3 |
| N,N,N',N'-Tetrakis(2,3-epoxypropyl) cyclohexyl-1,3-dimethylamin | Syna Epoxy S-610 | Synasia | 65992-66-7 |
| Terpenphenolharz | Dertophene T | DRT | 25359-84-6 |
| Kolophoniumharz | Foral 85-E (Erweichungspunkt 85 °C) | Eastman | 65997-13-9 |
| Kohlenwasserstoffharz | Kristalex F85 Hydrocarbon Resin (Erweichungspunkt 86 °C) | Eastman | 9011-11-4 |
| Kohlenwasserstoffharz | Dercolyte TS 105 (Erweichungspunkt 105 °C) | DRT | |
| Kohlenwasserstoffharz | Wingtack 10 (Erweichungspunkt 10 °C) | CrayValley | 26813-14-9 |

Herstellung der Polyacrylate

Ein für radikalische Polymerisationen konventioneller 300 L-Reaktor wurde mit den bei den Beispielen angegebenen Mengen an Acrylsäure, 2-Ethylhexylacrylat (EHA) und n-Butylacrylat sowie 72,4 kg Benzin/Aceton (70:30) befüllt. Nach 45minütiger Durchleitung von Stickstoffgas unter Rühren wurde der Reaktor auf 58 °C hochgeheizt und 50 g Vazo® 67 hinzugegeben. Anschließend wurde die Manteltemperatur auf 75 °C eingestellt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Benzin/Aceton (70:30) und nach 6 h mit 10,0 kg Benzin/Aceton (70:30) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Die erhaltenen Polymere wiesen gewichtsmittlere Molmassen $M_w$ im Bereich von 1.100.000 bis 1.300.000 g/mol auf.

Schließlich wurden die Vernetzerlösung (Syna Epoxy S-610, 3 Gew.-% in Aceton; 0,05 Gewichtsteile Vernetzer bezogen auf 100 Gewichtsteile Polyacrylat) sowie die Harze in den in Tabelle 1 angegebenen Mengen zu der Polymerlösung gegeben. Die so hergestellte Masse wurde mittels eines Streichrakels auf einem Laborstreichtisch auf ein silikonisiertes Trennpapier beschichtet. Die Beschichtungen wurden anschließend bei 120 °C für 15 min getrocknet.

Die Muster wurden 14 Tage bei Normklima (23 °C, 50 % relative Feuchte) konditioniert.

Die Massezusammensetzungen und die Testergebnisse sind in den Tabellen 1 und 2 enthalten.

Tabelle 1: Zusammensetzung der Haftklebmassen

| Nr. | Polyacrylate (Gew.-%) | | | TP-Harz | K-Harz | KW-Harz 1 | KW-Harz 2 | KW-Harz 3 |
|---|---|---|---|---|---|---|---|---|
| | n-BA | 2-EHA | AS | | | | | |
| 1 (V) | 49,5 | 49,5 | 1 | 20 | - | - | 15 | - |
| 2 (V) | 49,5 | 49,5 | 1 | - | 20 | 20 | 0 | - |
| 3 | 49,5 | 49,5 | 1 | 20 | - | - | 15 | 10 |
| 4 (V) | 49,5 | 49,5 | 1 | 25 | - | - | 15 | - |
| 5 (V) | 49,5 | 49,5 | 1 | - | - | - | 20 | - |
| 6 (V) | 49,5 | 49,5 | 1 | - | - | 25 | - | - |
| 7 (V) | 49,5 | 49,5 | 1 | - | - | 20 | 10 | - |
| 8 (V) | 49,5 | 49,5 | 1 | - | 30 | - | - | - |
| 9 (V) | 49,5 | 49,5 | 1 | - | 20 | 20 | - | - |
| 10 (V) | 49,5 | 49,5 | 1 | 20 | - | 20 | - | - |
| 11 | 49,5 | 49,5 | 1 | 20 | - | - | 20 | 5 |
| 12 | 49,5 | 49,5 | 1 | 30 | - | - | 15 | 5 |
| 13 | 49,5 | 49,5 | 1 | 15 | - | - | 15 | 15 |
| 14 (V) | 67 | 30 | 3 | - | 20 | 20 | - | - |
| 15 | 67 | 30 | 3 | - | 20 | 20 | - | 10 |
| 16 | 67 | 30 | 3 | 20 | - | - | 15 | 10 |
| 17 (V) | 67 | 30 | 3 | - | 30 | 20 | - | - |
| 18 | 67 | 30 | 3 | 25 | - | - | 10 | 10 |

TP-Harz - Terpenphenolharz (Dertophene T)
K-Harz - Kolophoniumharz (Foral 85E)
KW-Harz 1 - Kohlenwasserstoffharz 1 (Kristalex F85)
KW-Harz 2 - Kohlenwasserstoffharz 2 (Dercolyte TS 105)
KW-Harz 3 - Kohlenwasserstoffharz 3 (Wingtack 10)
V - Vergleichsversuch (nicht erfindungsgemäß)

Tabelle 2: Testergebnisse

| | Klebkraft (N/cm), gemessen auf ... | | | |
|---|---|---|---|---|
| Nr. | PE | PP | Stahl (ASTM) | EPDM rau (mittlere Rauigkeit 7,5 $\mu$m) |
| 1 (V) | 3,51 | 4,68 | 5,18 | 3,32 |
| 2 (V) | 3,32 | 6,07 | 5,74 | 3,78 |
| 3 | 5,93 | 9,71 | 6,78 | 6,32 |
| 4 (V) | 3,92 | 7,32 | 5,50 | 3,95 |
| 5 (V) | 2,59 | 5,06 | 4,92 | 3,58 |
| 6 (V) | 2,33 | 4,13 | 5,10 | 2,55 |

(fortgesetzt)

|  | Klebkraft (N/cm), gemessen auf ... | | | |
| --- | --- | --- | --- | --- |
| Nr. | PE | PP | Stahl (ASTM) | EPDM rau (mittlere Rauigkeit 7,5 $\mu$m) |
| 7 (V) | 3,17 | 5,78 | 5,63 | 3,63 |
| 8 (V) | 2,44 | 4,37 | 4,99 | 2,44 |
| 9 (V) | 3,52 | 6,07 | 5,27 | 3,28 |
| 10 (V) | 3,47 | 3,89 | 3,99 | 3,26 |
| 11 | 5,14 | 8,21 | 6,20 | 5,67 |
| 12 | 5,24 | 7,80 | 6,38 | 5,13 |
| 13 | 4,94 | 7,25 | 5,99 | 5,47 |
| 14 (V) | 3,52 | 8,76 | 6,01 | 3,11 |
| 15 | 6,05 | 9,50 | 6,22 | 6,85 |
| 16 | 5,23 | 8,88 | 6,15 | 6,69 |
| 17 (V) | 3,25 | 7,96 | 5,48 | 3,20 |
| 18 | 5,11 | 8,10 | 5,67 | 6,40 |
| PE - Polyethylen<br>PP - Polypropylen<br>EPDM - Ethylen-Propylen-Dien-Copolymer | | | | |

**Patentansprüche**

1. Haftklebmasse, enthaltend

   a) mindestens ein Poly(meth)acrylat;
   b) mindestens ein Harz A ausgewählt aus Kolophoniumharzen und Terpenphenolharzen;
   c) mindestens ein Kohlenwasserstoffharz B1 mit einem Erweichungspunkt (ermittelt gemäß ASTM E28 (Ring-and-Ball)) von größer als 50 °C; und
   d) mindestens ein Kohlenwasserstoffharz B2 mit einem Erweichungspunkt (ermittelt gemäß ASTM E28 (Ring-and-Ball)) von kleiner oder gleich 25 °C,

   **dadurch gekennzeichnet, dass** die Haftklebmasse ein oder mehrere Harze A zu insgesamt 15 bis 30 Gew.-%, bezogen auf das Gesamtgewicht der Haftklebmasse, enthält.

2. Haftklebmasse gemäß Anspruch 1, **dadurch gekennzeichnet, dass** das Poly(meth)acrylat ein Copolymer ist, das auf eine Monomerenzusammensetzung umfassend

   i) einen oder mehrere Acrylsäurealkylester mit einem Alkylrest umfassend 1 bis 4 C-Atome;
   ii) einen oder mehrere Acrylsäurealkylester mit einem Alkylrest umfassend 5 oder mehr C-Atome; und
   iii) Acrylsäure

   zurückgeführt werden kann.

3. Haftklebmasse gemäß Anspruch 2, **dadurch gekennzeichnet, dass** die Monomerenzusammensetzung Acrylsäure zu 0,5 bis 5 Gew.-%, bezogen auf das Gesamtgewicht der Monomerenzusammensetzung, umfasst.

4. Haftklebmasse gemäß einem der vorstehenden Ansprüche, **dadurch gekennzeichnet, dass** das mindestens eine Harz A ein Terpenphenolharz ist.

5. Haftklebmasse gemäß einem der vorstehenden Ansprüche, **dadurch gekennzeichnet, dass** die Haftklebmasse ein oder mehrere Harze B1 zu insgesamt 10 bis 25 Gew.-%, bezogen auf das Gesamtgewicht der Haftklebmasse, enthält.

**6.** Haftklebmasse gemäß einem der Ansprüche 1 und 2, **dadurch gekennzeichnet, dass** die Haftklebmasse ein oder mehrere Harze B2 zu insgesamt 5 bis 15 Gew.-%, bezogen auf das Gesamtgewicht der Haftklebmasse, enthält.

**7.** Klebeband, umfassend eine Haftklebmasse gemäß einem der Ansprüche 1 bis 6.

**Claims**

**1.** Pressure-sensitive adhesive comprising

a) at least one poly(meth)acrylate;
b) at least one resin A selected from colophony resins and terpene-phenolic resins;
c) at least one hydrocarbon resin B1 having a softening point (determined according to ASTM E28 (ring and ball)) of greater than 50°C; and
d) at least one hydrocarbon resin B2 having a softening point (determined according to ASTM E28 (ring and ball)) of less than or equal to 25°C,

**characterized in that** the pressure-sensitive adhesive comprises one or more resins A at in total 15 to 30 wt%, based on the total weight of the pressure-sensitive adhesive.

**2.** Pressure-sensitive adhesive according to Claim 1, **characterized in that** the poly(meth)acrylate is a copolymer derivable from a monomer composition comprising

i) one or more alkyl acrylates having an alkyl radical comprising 1 to 4 carbons;
ii) one or more alkyl acrylates having an alkyl radical comprising 5 or more carbons; and
iii) acrylic acid.

**3.** Pressure-sensitive adhesive according to Claim 2, **characterized in that** the monomer composition comprises acrylic acid at 0.5 to 5 wt%, based on the total weight of the monomer composition.

**4.** Pressure-sensitive adhesive according to any of the preceding claims, **characterized in that** the at least one resin A is a terpene-phenolic resin.

**5.** Pressure-sensitive adhesive according to any of the preceding claims, **characterized in that** the pressure-sensitive adhesive comprises one or more resins B1 at in total 10 to 25 wt%, based on the total weight of the pressure-sensitive adhesive.

**6.** Pressure-sensitive adhesive according to either of Claims 1 and 2, **characterized in that** the pressure-sensitive adhesive comprises one or more resins B2 at in total 5 to 15 wt%, based on the total weight of the pressure-sensitive adhesive.

**7.** Adhesive tape comprising a pressure-sensitive adhesive according to any of Claims 1 to 6.

**Revendications**

**1.** Masse autoadhésive, contenant

a) au moins un poly(méth)acrylate ;
b) au moins une résine A choisie parmi des résines de colophane et des résines de terpènephénol ;
c) au moins une résine d'hydrocarbure B1 dotée d'un point de ramollissement (mesuré selon la norme ASTM E28 (anneau et bille)) supérieur à 50 °C ; et
d) au moins une résine d'hydrocarbure B2 dotée d'un point de ramollissement (mesuré selon la norme ASTM E28 (anneau et bille)) inférieur ou égal à 25 °C,

**caractérisée en ce que** la masse autoadhésive contient au total 15 à 30 % en poids d'une ou plusieurs résines A, par rapport au poids total de la masse autoadhésive.

2. Masse autoadhésive selon la revendication 1, **caractérisée en ce que** le poly(méth)acrylate est un copolymère qui peut être ramené à une composition de monomères comprenant

   i) un ou plusieurs esters d'alkyle d'acide acrylique comportant un radical alkyle comprenant 1 à 4 atomes de C ;
   ii) un ou plusieurs esters d'alkyle d'acide acrylique comportant un radical alkyle comprenant 5 atomes de C ou plus ; et
   iii) de l'acide acrylique.

3. Masse autoadhésive selon la revendication 2 **caractérisée en ce que** la composition de monomères comprend 0,5 à 5 % en poids d'acide acrylique, par rapport au poids total de la composition de monomères.

4. Masse autoadhésive selon l'une quelconque des revendications précédentes, **caractérisée en ce que** l'au moins une résine A est une résine de terpènephénol.

5. Masse autoadhésive selon l'une quelconque des revendications précédentes, **caractérisée en ce que** la masse autoadhésive contient au total 10 à 25 % en poids d'une ou plusieurs résines B1, par rapport au poids total de la masse autoadhésive.

6. Masse autoadhésive selon l'une quelconque des revendications 1 et 2, **caractérisée en ce que** la masse autoadhésive contient au total 5 à 15 % en poids d'une ou plusieurs résines B2, par rapport au poids total de la masse autoadhésive.

7. Ruban adhésif comprenant une masse autoadhésive selon l'une quelconque des revendications 1 à 6.

**IN DER BESCHREIBUNG AUFGEFÜHRTE DOKUMENTE**

**In der Beschreibung aufgeführte Patentdokumente**

- WO 2010002557 A1
- EP 1580245 A1
- JP 2008260825 A
- DE 102013224772 A
- DE 102013224773 A
- EP 1312097 A1
- EP 1300452 A2
- DE 10229527 A1
- WO 2006108871 A1

**In der Beschreibung aufgeführte Nicht-Patentliteratur**

- **T.G. FOX.** *Bull. Am. Phys. Soc.,* 1956, vol. 1, 123